# EUROPEAN PATENT SPECIFICATION

(11) **EP 2 251 966 B1**
(45) Date of publication and mention of the grant of the patent: **04.04.2012**
(21) Application number: 09160037.9
(22) Date of filing: 12.05.2009
(51) Int. Cl.: H02M 3/156, H02M 3/158

(54) **DC-DC converter with discontinuous and continuous conduction modes**
Gleichstromwandler mit diskontinuierlichen und kontinuierlichen Leitmodi
Convertisseur CC-CC avec modes de conduction discontinue et continue

(43) Date of publication of application: 17.11.2010
(73) Proprietor: ST-Ericsson SA, Geneva (CH)
(72) Inventor: Antheunis, Roland, 6641 GV Beuningen (NL); Alkema, Wilfred, 6536 EA Nijmegen (NL)
(74) Representative: Bird, William Edward

(56) References cited:
- US-B1- 7 266 001
- CHOW M H L ET AL: "Analysis of performance limits of continuous-mode boost converters for power-factor-correction applications" PROCEEDINGS OF 1997 IEEE INTERNATIONAL SYMPOSIUM ON CIRCUITS AND SYSTEMS, 1997. ISCAS '97., HONG KONG 9-12 JUNE 1997, NEW YORK, NY, USA,IEEE, US, vol. 2, 9 June 1997 (1997-06-09), pages 877-880, XP010236325 ISBN: 978-0-7803-3583-7
- SAU-MOU WU ET AL: "A New Adaptive Mode-Switching Mechanism with Current-mode CMOS DC-DC Converter" INTEGRATED CIRCUITS, 2007. ISIC '07. INTERNATIONAL SYMPOSIUM ON, IEEE, PI, 1 September 2007 (2007-09-01), pages 548-551, XP031210320 ISBN: 978-1-4244-0796-5
- DEGUSSEME K ET AL: "Digitally Controlled Boost Power-Factor-Correction Converters Operating in Both Continuous and Discontinuous Conduction Mode" IEEE TRANSACTIONS ON INDUSTRIAL ELECTRONICS, IEEE SERVICE CENTER, PISCATAWAY, NJ, USA, vol. 52, no. 1, 1 February 2005 (2005-02-01), pages 88-97, XP011126516 ISSN: 0278-0046
- OLAYIWOLA A ET AL: "Digital Controller for a Boost PFC Converter in Continuous Conduction Mode" INDUSTRIAL ELECTRONICS AND APPLICATIONS, 2006 1ST IEEE CONFERENCE ON, IEEE, PI, 1 May 2006 (2006-05-01), pages 1-8, XP031026672 ISBN: 978-0-7803-9513-8

## Description

**Field of the invention:** This invention relates to DC-DC converters, to integrated circuits having such converters, and to methods of using or making such apparatus.

### Background of the invention

Known DC to DC converters operate in DCM (discontinuous conduction mode) or in CCM (continuous conduction mode), each having their own advantages and disadvantages. The DCM type of converter has a simple control circuit. An advantage of DCM converters is that the power efficiency of the converter is fairly independent of the load condition. The average current of a DCM type of converter however is limited to half of the peak current of the converter. As a consequence the DCM type of converter has the drawback that the used coil and switching elements need to be capable of handling two times the average coil current, which limits the component choice. Additionally, because the dissipation in the current carrying components increases quadratically with the required output current (I²R), the converter has low efficiency when it is used at high load current.

In a traditional CCM converter the operating frequency is fixed and the average current is typically chosen as high as 70% to 80% of the peak current in the inductor. This type of converter is well suited for high current load applications. In case of low current load the efficiency decreases significantly due to the relatively high capacitive switching loss. The control circuit needs circuitry to set the required duty cycle, and guarantee stable operation, which makes it more complex than a DCM converter. The output voltage response of the CCM converter to a fast changing load current generally shows significant over- or undershoot.

State-of-the-art converters use CCM and DCM operation dependent on the load current. They require a controller that selects the mode of operation. CCM converters based on voltage mode control need additional circuitry to set the required duty cycle. CCM converters based on current mode control need additional circuitry to prevent subharmonic oscillation at duty cycles higher than 50%. The resulting controller plus circuitry is complex and leads to an increase of current consumption limiting the efficiency.

There are several known ways to design a DC to DC converter with overall good performance for a large load current range.

A known solution A is a DCM/ CCM converter, that has a controller that controls the (discrete) switching between CCM and DCM mode. This solution involves some complexity, die-size and power consumption because it needs a mode switching algorithm/controller and additional subharmonic oscillation cancellation circuitry needed for fixed frequency CCM converters.

Another known solution B is based on a DCM converter, of which the demagnitization time is fixed to a minimum value. In this way, new current pulses can be started after a certain (minimum) of time. The converter can enter DCM or CCM dependent on the requested load current.

This solution will however require different demagnitization time settings when Vout is not constant. The solution needs additional control circuit to measure Vout and/or correct the demagnitization time setting. Dependent on available information about the magnitude of Vout, this leads to a moderate to highly complex circuit.

Examples are shown in US patent 6,972,548 and 5,801,518

US Patent 6,556,462 shows a high power factor converter with a boost circuit having continuous/discontinuous modes, and having an input rectifier, a converter and a booster circuit. The input rectifier is configured for rectifying an input ac voltage. The converter is configured for generating an output voltage for the high power factor converter system. The converter comprises several converter switches and inverse parallel diodes. The booster circuit comprises an inductor and at least one converter switch and an inverse parallel diode of the converter. The inductor is coupled between the input rectifier and the converter. The booster circuit is configured for controlling the supply of a booster current through the inductor to be discontinuous when the instantaneous voltage level is less than a predetermined fraction of a dc voltage level across the converter and continuous when the instantaneous voltage level is greater than the predetermined fraction of the dc voltage level.

US 6,396,252 shows a switching DC-to-DC converter having at least one power channel including an inductor and a switching controller chip which generates at least one power switch control signal for at least one power switch of each power channel. The converter is configured to operate in a continuous mode when the inductor current remains above zero, to enter a discontinuous pulse skipping mode of operation when the inductor current falls to zero (which occurs when the load current is below a threshold value), and to leave the discontinuous pulse skipping mode and resume continuous mode operation when the inductor current rises above zero. The main difference between the continuous and discontinuous pulse skipping modes is that in the continuous mode, a power switch has a duty cycle determined by a feedback signal indicative of the converter's output potential Vout (so that the duty cycle is independent of the current drawn from the converter by the load), and in the discontinuous pulse skipping mode the power switch has a duty cycle which is the longer of a minimum duty cycle and a discontinuous (non-pulse-skipping) mode duty cycle. The discontinuous pulse skipping mode is more efficient than the continuous mode under conditions of low load current. The controller includes cycle-skipping circuitry operable in the discontinuous pulse skipping mode and optionally also the continuous mode to cause the power switch to remain off for at least one cycle under the condition that the converter's output potential rises above a threshold. Preferably, the cycle-skipping circuitry includes a comparator which compares an error amplifier output (indicative of the converter output potential) with a threshold potential, and logic circuitry (e.g., an AND gate coupled to the comparator output) which asserts a latch-clearing signal once per switching cycle when the comparator output indicates that the converter's output has risen above the threshold. A similar device is described in Chow M H,"Analysis of perfomance limits of continuous mode boost converters for PFC applications", ISCAS 1997, vol. 2,9 June 1997, pages 877-880. The preamble of claims 1 and 9 are drafted accordingly.

### Summary of the Invention:

An object of the invention is to provide a simple controller and a corresponding control method for a DC-DC convector, capable of managing transitions between DCM and CCM. According to a first aspect, the invention provides:

A switching DC to DC converter having an inductive component, a switch control circuit, and a switch controllable by the switch control circuit to cause the DC to DC converter to alternate between a magnetization phase in which an inductor current in the inductive component increases, and a demagnetization phase in which the inductor current decreases, the switch control circuit having a first comparator for comparing an inductor current to an intermediate threshold below a maximum inductor current, and a second comparator for comparing an output voltage to a voltage threshold, outputs of the comparators being coupled to cause the switch to switch from the demagnetization phase to the magnetization phase when the first comparator indicates that the inductor current has dropped below the intermediate threshold, and dependent on the output of the second comparator.

This intermediate current threshold enables the conduction mode to be continuous if the output of the second comparator allows, since the magnetization can restart before the inductor current drops to zero. If the second comparator does not allow restart of the magnetization phase before the inductor current drops to zero, for example because the output is lightly loaded, then the conduction mode can be discontinuous. This helps enable a combination of the benefits of both conduction modes, and with relatively simple components.

Embodiments of the invention can have any other features added, some such additional features are set out in dependent claims and described in more detail below.

One such additional feature is the switch control circuit having a third comparator arranged to compare the inductor current to a maximum current threshold, and coupled to cause the switch to switch from the magnetization phase to the demagnetization phase when the third comparator indicates that the inductor current has risen to the maximum current threshold. This has the benefit of being directly related to the actual current through the inductor. The inductor will have a maximum current limit that causes it to saturate. By measuring the actual current, it is easier to stay away from that limit. An alternative is to have the switch to the demagnetization phase triggered by for example an expiring fixed or calculated/derived variable time delay.

Another such additional feature is the switch control circuit having a flipflop component coupled to the switch to maintain the state of the switch until set or reset inputs of the flipflop are activated by the comparators.

Another such additional feature is the switch control circuit having circuitry to vary the intermediate current threshold.

Another such additional feature is the switch control circuit having circuitry to vary the maximum current threshold.

Another such additional feature is the DC to DC converter not having circuitry to prevent subharmonic oscillation.

Another such additional feature is the DC to DC converter not having circuitry to implement a state machine for control of the switching.

The present invention also provides a method of controlling a switching DC to DC converter having an inductive component (L1), and a switch (SW1) to cause the DC to DC converter to alternate between a magnetization phase in which an inductor current in the inductive component increases, and a demagnetization phase in which the inductor current decreases, the method having the steps of a first comparison of an inductor current to an intermediate threshold below a maximum inductor current, a second comparison of an output voltage to a voltage threshold, using results of the first and second comparisons to cause the switch to switch from the demagnetization phase to the magnetization phase when the first comparison indicates that the inductor current has dropped below the intermediate threshold, and the second comparison indicates that the output voltage is below the voltage threshold.

A third comparison can be made in which the inductor current is compared to a maximum current threshold. The switch is caused to switch from the magnetization phase to the demagnetization phase when the third comparison indicates that the inductor current has risen to the maximum current threshold.

The method may also include varying the intermediate threshold, e.g. varying the maximum current threshold.

Preferably the method includes preventing subharmonic oscillation. Preferably the method includes maintaining the state of the switch until set or reset in accordance with the outputs of the first and second comparisons.

Other aspects of the invention include corresponding integrated circuits having such a converter, and corresponding methods. Any of the additional features can be combined together and combined with any of the aspects. Other advantages will be apparent to those skilled in the art, especially over other prior art. Numerous variations and modifications can be made without departing from the claims of the present invention. Therefore, it should be clearly understood that the form of the present invention is illustrative only and is not intended to limit the scope of the present invention.

### Brief Description of the Drawings:

How the present invention may be put into effect will now be described by way of example with reference to the appended drawings, in which:
Fig 1 shows a schematic view of a known DC-DC converter,
Fig 2 shows a graph of inductor current over time for the embodiment of figure 2,
Fig 3 shows a graph of inductor current over time for an embodiment of the invention, and
Fig 4 shows a schematic view of a DC-DC converter according to a first embodiment of the invention.

### Detailed Description of Embodiments:

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein. Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention. Furthermore, while some embodiments described herein include some but not other features included in other embodiments, combinations of features of different embodiments are meant to be within the scope of the invention, as defined by the annexed claims.

Furthermore, some of the embodiments are described herein as a method or combination of elements of a method that can be implemented by digital logic implemented by standard or application specific integrated circuit parts or by discrete components or by any other means of carrying out the function. Thus, a processor with the necessary instructions for carrying out such a method or element of a method can form a means for carrying out the method or element of a method except where stated otherwise. Furthermore, an element described herein of an apparatus embodiment is an example of a means for carrying out the function performed by the element for the purpose of carrying out the invention. References to a signal can encompass any kind of signal in any medium, and so can encompass an electrical or optical or wireless signal or other signal for example.

In the description provided herein, numerous specific details are set forth. However, it is understood that embodiments of the invention may be practiced without these specific details. In other instances, well-known methods, structures and techniques have not been shown in detail in order not to obscure an understanding of this description. References to switching DC to DC converters can encompass any type of switching converter as opposed to linear converters, and can encompass forward or flyback types, step up or step down, inverting or non inverting types, hard switched types, resonant types, transformer or non transformer types, and isolating or non isolating types, and so on.

References to an inductive component can encompass an inductor, a transformer or any other component or combination of components having a similar effect.

References to flipflops are intended to cover any type of component or combination of components with similar stable but resettable output logic states.

References to comparators are intended to encompass any type of comparing device, and can encompass any device which subtracts then uses a sign of the result, for example.

### Introduction to some issues addressed by some of the embodiments

Before introduction to the embodiments and the features of switch control for DCM/CCM DCDC-converters using multiple current threshold levels, the context will be explained briefly. Switch control methods or algorithms for an inductive-type dc-dc converter such as buck and/or boost converters can have a need for high inductor peak current in traditional converters that operate in Discontinuous Conduction Mode (DCM).

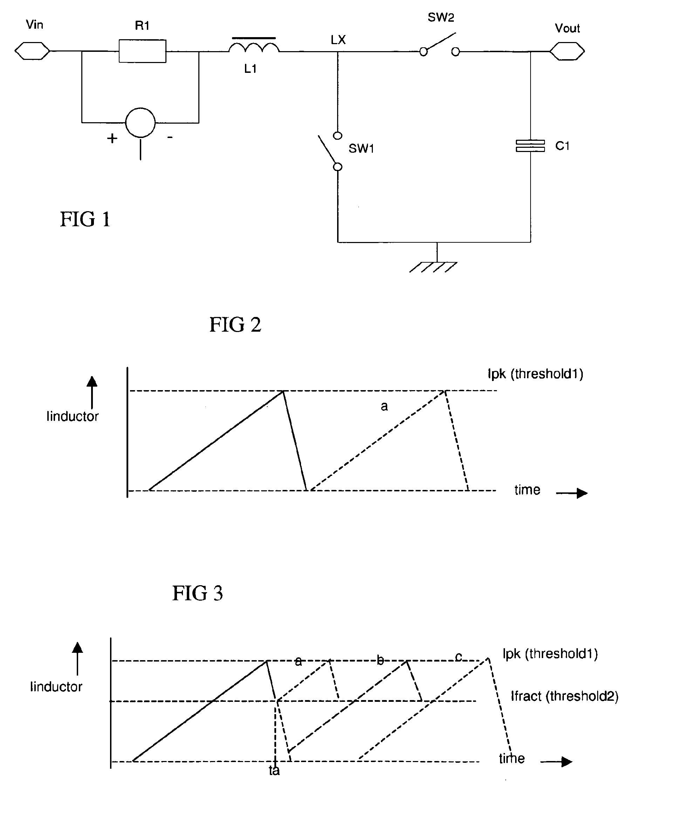

### Figures 1 and 2, known converter

In figure 1, the basic schematic of a conventional boost converter is sketched. This shows an inductor L1 coupled to an input and in series with a resistor R1 used to measure the inductor current. One side of the inductor is coupled to ground via switch SW1. The same side is also coupled to an output via switch SW2. The output is coupled to ground via a capacitor C1. The switches are controlled by a controller (not shown).

In a magnetization phase, SW1 is closed (and SW2 is open). The inductor current increases to a maximum current shown by threshold1. In the demagnetization phase, SW2 is closed (SW1 is open). The energy in the inductor is transferred to the capacitor. In this phase the inductor current decreases.

In figure 2, the inductor current waveform in DCM is sketched for the maximum current pulse frequency: the new current pulse 'a' is started just after the current through the inductor has reached zero. In this prior art standard DCM voltage mode controller, the controller will initiate a new current pulse if its output voltage drops below a certain threshold, related to the intended output voltage. To stay in discontinuous conduction, a new current pulse is initiated only after the converter's inductor current has dropped to zero. The frequency of occurrence of the current pulses is dependent on the required load current of the DC to DC converter. The maximum current that can be delivered is limited to the case where a new current pulse is initiated immediately after the inductor current reached zero.

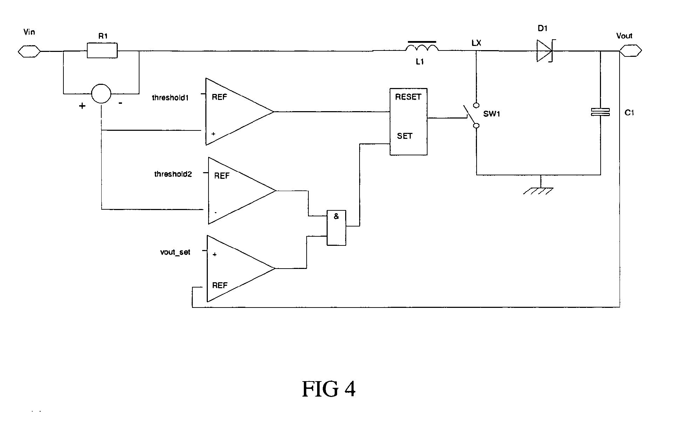

### Figures 3,4 features of the embodiments

The switch control circuit used by the embodiments of the invention can work in very much in the same way, however it can also allow new current pulses to be initiated, when the inductor current has dropped below a certain positive, non zero current threshold level. Because a new current pulse can be started before the current has reached zero, this results in a higher frequency of occurrence of current pulses, and in a CCM mode. The obtained higher average inductor current increases the amount of current that the DC to DC converter can deliver, while maintaining its intended output voltage.

There are many possible implementations, at least some of them involve combinations of the following features.
1 Measurement of the inductor current. This can be for example in a sense resistor R in series with the converter's inductor, or measurement of the inductor current at other places in the circuit, directly, or indirectly by measuring voltage across an element in series or in parallel with the inductor. Dependent on the momentary phase of the converter (magnetization/demagnetization) the current can be measured at different locations in the circuit.
2 Provision of fixed current threshold levels. These can be 'threshold1' (maximum current threshold) and 'threshold2' (intermediate threshold) or dynamically adjusted threshold levels 'threshold' and `threshold2', i.e. thresholds levels changed as function of in- or output voltage or time for example.

Adjusting as function of voltage can be:
1. to generate a more or less known CCM frequency for a certain load current, e.g. to prevent interference to other blocks/devices, or
2. to obtain input or output current limitation, e.g. USB host current limit or
3. to control the converter's startup-behaviour.

Adjusting as function of time can be:
1. to control the converter's startup-behaviour, or
2. to optimize performance for a priori known load changes, or
3. to comply to standards of the DC input voltage source, before and after enumeration (negotiation of allowed current consumption by USB-host with USB-client).

The features of the described embodiments can make it possible to design dc-dc converters with a smaller or minimum of die-area and with small external components. The embodiments are based on controlling the time at which a new DCM current pulse is created, by monitoring not only the output voltage of the converter, but also the instantaneous inductor current. They can be used in many kinds of DC-DC converters, including buck, boost, types and so on.

The embodiments can use a minimum of analog circuitry, and does not need a finite state machine controller to control the switch between DCM and CCM operation. Therefore the required die area and power consumption can be reduced, and hence costs reduced. A converter using these features makes it possible to use smaller and cheaper components, because it can work at lower maximum current inductor for a given output current.

Because the converter works with low (inductor) peak currents, it has low power loss.

At least some embodiments can work without any circuits for prevention of subharmonic oscillation. Thus complexity, die area and power consumption are reduced. In the following, the working of an example is explained for the case of a boost converter.

### Figs 3, 4 a first embodiment of the invention

In figure 3, the inductor current waveform of the proposed converter is sketched. The new current pulse can start at any time larger than, or equal to time 'ta'. 'ta' is determined by the moment at which the inductor current drops below 'threshold2'.

Three examples 'a', 'b' and 'c' are given.

For the implementation it is needed to measure the inductor current, to be able to determine when the inductor current crosses threshold1 or threshold2. The inductor current can in one implementation be measured in a resistor R1. Other implementations for the current measurement are possible, e.g. a current measurement in diode D1 or in a switch in place of the diode for example, following known implementation methods. Figure 4 shows a schematic view of apparatus according to a first embodiment. This shows some features as already shown in figure 1. A diode D1 is shown in place of switch SW2. Switch control circuitry is provided in the form of three comparators coupled to three reference signals to provide thresholds, an AND gate and a flipflop. The output of the flipflop drives the switch SW1. A set input of the flipflop is driven by an output of the AND gate. The inputs of the AND gate are driven by first and second comparators. The first comparator has inputs fed by a measure of the inductor current, and an intermediate threshold (threshold2), and indicates when the inductor current drops below the intermediate threshold. The second comparator has inputs fed by a measure of output voltage and a threshold Vout_set, indicating a desired voltage, arranged so that the comparator indicates when the output voltage goes below the set voltage.

The reset input of the flipflop is fed by a third comparator which has inputs fed by the measure of inductor current and a threshold (threshold1) indicating a maximum inductor current. These inductor current thresholds can be fixed or variable thresholds. If variable, there would be circuitry such as an analog multiplier circuit or digital arithmetic circuitry or processor circuitry to provide a threshold which varies with for example input or output voltage or with time.

When the output voltage Vout is below the intended value Vout_set -and- the current through resistor R1 is lower than threshold2, the flipflop is set, and SW1 closes (D1 is blocking). The magnetization of inductor L1 continues until the current through resistor R1 is exceeding threshold1. At that moment the flipflop is reset, SW1 opens and D1 starts conducting. The demagnetization continues until 1) the inductor current reaches zero. This happens in case Vout has reached its intended value Vout_set . No new magnetization pulse is started in this case. Asynchronous magnetization is started again when Vout drops below Vout_set. Or until 2) the moment at which the inductor current drops below threshold2 -and- Vout<Vout_set. Asynchronous magnetization is started in this case as soon as Vout drops below Vout_set. In figure 3 this can result in curve a or b. In the case of curve a, the output voltage has dropped below the set voltage before the inductor current has dropped to the intermediate value, as might happen under a heavy load or rapid increase of load on the output. In the case of curve b, the output voltage has dropped below the set voltage after the inductor current has dropped to the intermediate value, as might happen under a medium load or increase of load. In the case of curve c, the output voltage has dropped below the set voltage after the inductor current has dropped to zero, as might happen under a light load or a decrease of load. The proposed type of converter is a true combination of the advantages of the CCM and the DCM type of converter. It can provide in particular embodiments:

Simple control circuit (small area, less design effort), low power consumption, small ratio of peak current to average inductor current (wide choice of inductor and switching elements: small size/ low cost), fast transient response, constant power efficiency over large range, and stable operation (no subharmonic oscillation).

The proposed converter as shown in figure 4 is well suited for applications that need to operate predominantly at small load currents, but occasionally at high load currents.

The basis of the modified dc-dc converter is the DCM controller. The embodiments described help to reduce or remove the need for a high inductor peak current, even for high load currents. High load currents can be delivered by seamlessly going over to special form of CCM in case of high load currents. This can be done in some cases with minimum of analog circuitry, and without a digital controller (state-machine). Because of the way in which CCM is realized, it does not require subharmonic oscillation cancellation circuits, and it preserves the fast transient response of the DCM mode. This follows from the non-clocked nature of the resulting CCM modus. (subharmonic oscillation can only arise in clocked converters with an asynchronous element, e.g. the magnetization starts at a clocked moment and the transition from magnetization to demagnetization is asynchronous).

## Claims

1. A switching DC to DC converter having an inductive component (L1), a switch control circuit, and a switch (SW1) controllable by the switch control circuit to cause the DC to DC converter to alternate between a magnetization phase in which an inductor current in the inductive component increases, and a demagnetization phase in which the inductor current decreases, the switch control circuit having a first comparator for comparing an inductor current to an intermediate threshold (Ifract) below a maximum inductor current (Ipk) and a second comparator for comparing an output voltage (Vout) to a voltage threshold (vout_set), **characterised in that** the intermediate threshold is a positive, non zero current threshold level and **in that** the outputs of the first and second comparators are coupled to cause the switch to switch from the demagnetization phase to the magnetization phase either when the second comparator indicates that the output voltage drops below the voltage threshold if the first comparator already indicates that the inductor current has dropped below the intermediate threshold, or when the first comparator indicates that the inductor current drops below the intermediate threshold, and if the second comparator already indicates that the output voltage has dropped below the voltage threshold.

2. The converter of claim 1, the switch control circuit having a third comparator arranged to compare the inductor current to a maximum current threshold (Ipk), and coupled to cause the switch to switch from the magnetization phase to the demagnetization phase when the third comparator indicates that the inductor current has risen to the maximum current threshold.

3. The converter of claim 1 or 2, the switch control circuit having a flipflop component coupled to the switch to maintain the state of the switch until set or reset inputs of the flipflop are activated by the comparators.

4. The converter of any preceding claim, the switch control circuit having circuitry to vary the intermediate threshold.

5. The converter of any preceding claim, the switch control circuit having circuitry to vary the maximum current threshold.

6. The converter of any preceding claim not having circuitry to prevent subharmonic oscillation.

7. The converter of any preceding claim not having circuitry to implement a state machine for control of the switching.

8. An integrated circuit having the converter of any preceding claim.

9. A method of controlling a switching DC to DC converter having an inductive component (L1), and a switch (SW1) to cause the DC to DC converter to alternate between a magnetization phase in which an inductor current in the inductive component increases, and a demagnetization phase in which the inductor current decreases, the method having the steps of a first comparison of an inductor current to an intermediate threshold (Ifract) below a maximum inductor current, a second comparison of an output voltage to a voltage threshold (vout_Set), **characterised in that** the intermediate threshold is a positive, non zero current threshold level and **in that** the method comprises the step of using results of the first and second comparisons to cause the switch to switch from the demagnetization phase to the magnetization phase either when the second comparison indicates that the output voltage drops below the voltage threshold if the first comparison already indicates that the inductor current has dropped below the intermediate threshold, or when the first comparison indicates that the inductor current has dropped below the intermediate threshold, if the second comparison already indicates that the output voltage has dropped below the voltage threshold.

10. The method of claim 9 having the step of making a third comparison, comparing the inductor current to a maximum current threshold, and causing the switch to switch from the magnetization phase to the demagnetization phase when the third comparison indicates that the inductor current has risen to the maximum current threshold.

11. The method of claim 9 or 10 having the step of varying the intermediate threshold.

12. The method of any of claims 9, 10 or 11 having the step of varying the maximum current threshold.

13. The method of any of the claims 9 to 12, further comprising preventing subharmonic oscillation.

14. The method of any of claims 9 to 13, further comprising maintaining the state of the switch until set or reset in accordance with the outputs of the first and second comparisons.

## Patentansprüche

1. Gleichspannungsschaltwandler mit einem induktiven Bauelement (L1), einem Schalterregelkreis und einem Schalter (SW1) der von dem Schalterregelkreis geregelt werden kann, um den Gleichspannungswandler zwischen einer Magnetisierungsphase, in der ein Induktorstrom im induktiven Bauelement steigt, und einer Entmagnetisierungsphase, in der der Induktionsstrom abnimmt, wechseln zu lassen, wobei der Schalterregelkreis einen ersten Komparator zum Vergleichen eines Induktionsstroms mit einem intermediären Schwellenwert (Ifract) unter einem maximalen Induktionsstrom (Ipk) und einen zweiten Komparator zum Vergleichen einer Ausgangsspannung (Vout) mit einem Spannungsschwellenwert (vout_set) aufweist, **dadurch gekennzeichnet, dass** der intermediäre Schwellenwert ein positiver Stromschwellenwert ungleich Null ist und dass die Ausgänge vom ersten und zweiten Komparator gekoppelt sind, um den Schalter zu veranlassen, von der Entmagnetisierungsphase in die Magnetisierungsphase zu schalten, entweder wenn der zweite Komparator anzeigt, dass die Ausgangsspannung unter den Spannungsschwellenwert fällt, wenn der erste Komparator bereits anzeigt, dass der Induktionsstrom unter den intermediären Schwellenwert gefallen ist, oder wenn der erste Komparator anzeigt, dass der Induktionsstrom unter den intermediären Schwellenwert fällt, und wenn der zweite Komparator bereits anzeigt, dass die Ausgangsspannung unter den Spannungsschwellenwert gefallen ist.

2. Wandler nach Anspruch 1, wobei der Schalterregelkreis einen dritten Komparator aufweist, der zum Vergleichen des Induktionsstroms mit einem maximalen Stromschwellenwert (Ipk) ausgebildet ist und so gekoppelt ist, dass er den Schalter veranlasst, von der Magnetisierunqsphase in die Entmagnetisierungsphase zu schalten, wenn der dritte Komparator anzeigt, dass der Induktionsstrom auf den maximalen Stromschwellenwert gestiegen ist.

3. Wandler nach Anspruch 1 oder 2, wobei in dem Schalterregelkreis ein bistabiles Kippstufenbauelement an den Schalter gekoppelt ist, um den Zustand des Schalters aufrecht zu erhalten, bis Einstell- oder Rückstelleingaben der bistabilen Kippstufe von den Komparatoren aktiviert werden.

4. Wandler nach einem der vorangehenden Ansprüche, wobei der Schalterregelkreis einen Schaltkreis aufweist, um den intermediären Schwellenwert zu variieren.

5. Wandler nach einem der vorangehenden Ansprüche, wobei der Schalterregelkreis einen Schaltkreis aufweist, um den maximalen Stromschwellenwert zu variieren.

6. Wandler nach einem der vorangehenden Ansprüche ohne Schaltkreis, um eine subharmonische Schwingung zu verhindern.

7. Wandler nach einem der vorangehenden Ansprüche ohne Schaltkreis, um eine Zustandsmaschine zur Steuerung des Schaltvorganges zu implementieren.

8. Integrierter Schaltung mit dem Wandler nach einem der vorangehenden Ansprüche.

9. Verfahren zum Steuern eines Gleichspannungsschaltwandlers mit einem induktiven Bauelement (L1) und einem Schalter (SW1), um den Gleichspannungswandler zwischen einer Magnetisierungsphase, in der ein Induktionsstrom im induktiven Bauelement steigt, und einer Entmagnetisierungsphase, in der der Induktionsstrom abnimmt, wechseln zu lassen, wobei das Verfahren die Schritte eines ersten Vergleichs eines Induktionsstroms mit einem intermediären Schwellenwert (Ifract) unter einem maximalen Induktionsstrom, eines zweiten Vergleichs einer Ausgangspannung mit einem Spannungsschwellenwert (vout_set) umfasst, **dadurch gekennzeichnet, dass** der intermediäre Schwellenwert ein positiver Stromschwellenwert ungleich Null ist und dass das Verfahren den Schritt des Verwendens von Ergebnissen des ersten und zweiten Vergleichs umfasst, um den Schalter zu veranlassen, von der Entmagnetisierungsphase in die Magnetisierungsphase zu schalten, entweder wenn der zweite Komparator anzeigt, dass die Ausgangsspannung unter den Spannungsschwellenwert gefallen ist, wenn der erste Komparator bereits anzeigt, dass der Induktionsstrom unter den intermediären Schwellenwert gefallen ist, oder wenn der erste Komparator anzeigt, dass der Induktionsstrom unter den intermediären Schwellenwert fällt, wenn der zweite Komparator bereits anzeigt, dass die Ausgangsspannung unter den Spannungsschwellenwert gefallen ist.

10. Verfahren nach Anspruch 9, mit dem Schritt des Durchführens eines dritten Vergleichs, wobei der Induktionsstrom mit einem maximalen Stromschwellenwert verglichen wird und der Schalter veranlasst wird, von der Magnetisierungsphase in die Entmagnetisierungsphase zu schalten, wenn der dritte Vergleich anzeigt, dass der Induktionsstrom auf den maximalen Stromschwellenwert gestiegen ist.

11. Verfahren nach Anspruch 9 oder 10 mit dem Schritt des Variierens des intermediären Stromschwellenwerts.

12. Verfahren nach Anspruch 9, 10 oder 11 mit dem Schritt des Variierens des maximalen Stromschwellenwerts.

13. Verfahren nach einem der Ansprüche 9 bis 12, des Weiteren umfassend das Verhindern einer subharmonischen Schwingung.

14. Verfahren nach einem der Ansprüche 9 bis 13, des Weiteren umfassend das Aufrechterhalten des Zustandes des Schalters bis zum Einstellen oder Rückstellen gemäß den Ausgängen des ersten und zweiten Vergleichs.

## Revendications

1. Convertisseur CC - CC à commutation ayant un composant inductif (L1), un circuit de commande de commutation, et un commutateur (SW1) pouvant être commandé par le circuit de commande de commutation pour amener le convertisseur CC - CC à alterner entre une phase de magnétisation dans laquelle un courant d'induction dans le composant inductif augmente, et une phase de démagnétisation dans laquelle le courant d'induction diminue, le circuit de commande de commutation ayant un premier comparateur pour comparer un courant d'induction à un seuil intermédiaire (Ifract) au-dessous d'un courant d'induction maximal (Ipk), et un deuxième comparateur pour comparer une tension de sortie (Vout) à un seuil de tension (vout_set), **caractérisé en ce que** le seuil intermédiaire est un niveau de courant de seuil non nul, positif, et **en ce que** les sorties des premier et deuxième comparateurs sont couplées pour amener le commutateur à commuter de la phase de démagnétisation à la phase de magnétisation lorsque le deuxième comparateur indique que la tension de sortie chute au-dessous du seuil de tension si le premier comparateur indique déjà que le courant d'induction a chuté au-dessous du seuil intermédiaire, ou lorsque le premier comparateur indique que le courant d'induction chute au-dessous du seuil intermédiaire, et si le deuxième comparateur indique déjà que la tension de sortie a chuté au-dessous du seuil de tension.

2. Convertisseur selon la revendication 1, le circuit de commande de commutation ayant un troisième comparateur agencé pour comparer le courant d'induction à un seuil de courant maximal (Ipk) et couplé pour amener le commutateur à commuter de la phase de magnétisation à la phase de démagnétisation lorsque le troisième comparateur indique que le courant d'induction est monté jusqu'au seuil de courant maximal.

3. Convertisseur selon la revendication 1 ou 2, le circuit de commande de commutation ayant un composant à bascule bistable couplé au commutateur pour maintenir l'état du commutateur jusqu'à ce que des entrées de mise à un ou de remise à zéro de la bascule bistable soient activées par les comparateurs.

4. Convertisseur selon l'une quelconque des revendications précédentes, le circuit de commande de commutation ayant des circuits pour faire varier le seuil intermédiaire.

5. Convertisseur selon l'une quelconque des revendications précédentes, le circuit de commande de commutation ayant des circuits pour faire varier le seuil de courant maximal.

6. Convertisseur selon l'une quelconque des revendications précédentes, n'ayant pas de circuits pour empêcher une oscillation sous-harmonique.

7. Convertisseur selon l'une quelconque des revendications précédentes n'ayant pas de circuits pour mettre en oeuvre un automate fini pour la commande de la commutation.

8. Circuit intégré ayant le convertisseur selon l'une quelconque des revendications précédentes.

9. Procédé de commande d'un convertisseur CC - CC à commutation ayant un composant inductif (L1), et un commutateur (SW1) pour amener le convertisseur CC - CC à alterner entre une phase de magnétisation dans laquelle un courant d'induction dans le composant inductif augmente, et une phase de démagnétisation dans laquelle le courant d'induction diminue, le procédé ayant les étapes d'une première comparaison d'un courant d'induction à un seuil intermédiaire, (Ifract) au-dessous d'un courant d'induction maximal, d'une deuxième comparaison d'une tension de sortie à un seuil de tension (vout_set), **caractérisé en ce que** le seuil intermédiaire est un niveau de seuil de courant non nul, positif, et **en ce que** le procédé comprend l'étape d'utilisation de résultats des première et deuxième comparaisons pour amener le commutateur à commuter de la phase de démagnétisation à la phase de magnétisation lorsque la deuxième comparaison indique que la tension de sortie chute au-dessous du seuil de tension si la première comparaison indique déjà que le courant d'induction a chuté au-dessous du seuil intermédiaire, ou lorsque la première comparaison indique que le courant d'induction a chuté au-dessous du seuil intermédiaire, si la deuxième comparaison indique déjà que la tension de sortie a chuté au-dessous du seuil de tension.

10. Procédé selon la revendication 9 ayant l'étape de réalisation d'une troisième comparaison, comparant le courant d'induction à un seuil de courant maximal et amenant le commutateur à commuter de la phase de magnétisation à la phase de démagnétisation lorsque la troisième comparaison indique que le courant d'induction est monté jusqu'au seuil ce courant maximal.

11. Procédé selon la revendication 9 cu 10 ayant l'étape de faire varier le seuil intermédiaire.

12. Procédé selon l'une quelconque des revendications précédentes 9, 10 ou 11, ayant l'étape de faire varier le seuil de courant maximal.

13. Procédé selon l'une quelconque des revendications 9 à 12, comprenant en outre la prévention d'oscillation sous-harmonique.

14. Procédé selon l'une quelconque des revendications 9 à 13, comprenant en outre le maintien de l'état du commutateur jusqu'à la mise à un ou la remise à zéro selon les sorties des première et deuxième comparaisons.
